# EUROPÄISCHE PATENTSCHRIFT

(11) **EP 1 407 655 B1**
(45) Veröffentlichungstag und Bekanntmachung des Hinweises auf die Patenterteilung: **09.03.2011**
(21) Anmeldenummer: 03021082.7
(22) Anmeldetag: 18.09.2003
(51) Int. Cl.: A01F 29/09

(54) **Vorrichtung zur Schneidenöffnungswinkeleinstellung von beweglichen Messern an Zerkleinerungseinrichtungen**
Device for the adjustement of the cutting opening angle of moving blades in crushing apparatus
Dispositif pour l'ajustement de l'angle d'ouverture de coupe de lames mobiles d'appareils de broyage

(30) Priorität: 07.10.2002 DE 10246645
(43) Veröffentlichungstag der Anmeldung: 14.04.2004
(73) Patentinhaber: CLAAS Selbstfahrende Erntemaschinen GmbH, 33428 Harsewinkel (DE)
(72) Erfinder: Deppe, Markus, 33739 Bielefeld (DE); Isfort, Heinrich, 48249 Dülmen (DE)

(56) Entgegenhaltungen:
- EP-A- 0 568 961
- DE-A1- 2 220 826
- DE-C- 209 112
- US-A- 3 378 503
- US-B1- 6 370 851
- US-B1- 6 405 954

## Beschreibung

Die Erfindung betrifft eine landwirtschaftliche Erntemaschine, insbesondere einen selbstfahrenden Feldhäcksler, mit einer um eine horizontale Achse rotierenden Zerkleinerungseinrichtung, deren aus Trommelböden bestehender Grundkörper an seinem äußeren Umfang mit mehreren zueinander beabstandet angeordneten Aufnahmen besetzt ist, wobei die darin integrierten Messer mit der Gegenschneide den Schneidenöffnungswinkel bilden.

Solche Zerkleinerungseinrichtungen werden zum Zerkleinern von unterschiedlichem Erntegut wie Mais oder Gras benötigt, welches beispielsweise zur Herstellung von Tierfutter verwendet wird. Die Qualität des gehäckselten Ernteguts ist hierbei von entscheidender Bedeutung, da hiervon zugleich die Qualität des Tierfutters beeinflusst wird. Das Häckselergebnis ist dabei von dem durchgeführten Schnitt, welches das Erntegut durch die rotierenden Messer erfährt, abhängig.

In der DE-A-19918553 ist eine Zerkleinerungseinrichtung beschrieben, an deren Messer schaufelförmige Messerhalter ortsfest angeordnet sind. Diese Konstruktion soll der Verbesserung der strömungstechnischen Eigenschaften der aufkommenden Luft und des gehäckselten Ernteguts dienen. Zur Lösung dieser Aufgabe werden zwei Wege vorgeschlagen.
Der erste Lösungsweg legt einen schaufelförmigen Messerhalter zugrunde, der manuell ausgewechselt werden kann. Durch die glatte Oberfläche soll die Erntegutförderung optimiert werden. Nachteil dieser Gestaltung der Messerhalter ist die Gewichtszunahme der gesamten Zerkleinerungseinrichtung, da jeder Messerhalter um die Schaufelform erweitert wird. Durch die Gewichtszunahme wird ein erhöhter Energiebedarf notwendig. Ferner ist ein Verstellen der Messer bei dieser Ausführungsform nicht möglich. Dies kann nur durch einen kompletten Austausch form nicht möglich. Dies kann nur durch einen kompletten Austausch der Messer erfolgen.
Der zweite Lösungsweg beschreibt zwei unterschiedliche Elemente, die zumindest einen Teil der Wurfschaufelfläche bilden. Der Nachteil des zweiten Lösungsweges besteht darin, das sämtliche Einstellungen manuell an jedem einzelnen Element vorzunehmen sind. Insbesondere bei unterschiedlichen Häckselmaterialien ist ein kompletter Austausch der Elemente erforderlich. Der Zeitaufwand und die hierdurch verursachten Stillstandszeiten sind dabei erheblich.

Ein weiterer Nachteil bei den in der offenbarten Ausführung benannten Lösungswegen ist die starre Anordnung der Messer in der Zerkleinerungseinrichtung.
Hierdurch wird das Messer direkt durch versehentlich in den Erntegutkanal eingezogene feste Fremdkörper, wie beispielsweise Steine, hart getroffen. Dieser Umstand hat eine unmittelbare Beschädigung oder Deformation der Messer zur Folge. Darüber hinaus führen abgebrochene Messerteile zu Folgeschäden innerhalb der Erntemaschine, was letztlich zum Ausfall der Maschine und zu aufwendigen Reparaturarbeiten führen kann.

Die Möglichkeit der Schneidenöffnungswinkelverstellung ist nach der zugrundeliegenden DE-A-19918553 nicht eröffnet.

Die US3,378,503 offenbart ein Häckselmesseranordnung, wobei die Häckselmesser In Langlochführungen so auf einem Messersockel befestigt sind, dass sie verschleißbedingte Abstandsänderungen zwischen Schneidkante der Häckselmesser und der Gegenschneide ausgeglichen werden können. Derartige Systeme haben jedoch den Nachteil, dass für unterschiedliche Erntegutarten separate Häckselmessersätze bereitgehalten werden müssen, da die Häckselmesser in ihrer Arbeitsposition stets den gleichen Schnittwinkel aufspannen, der sich verschleißbedingt ändert und dann durch Nachstellen der Häckselmesser wieder ausgeglichen wird.

Der vorliegenden Erfindung liegt daher die Aufgabe zugrunde, eine Zerkleinerungseinrichtung der eingangs näher bezeichneten Art so weiterzuentwickeln, dass die vorbezeichneten Nachteile vermieden werden.

Diese Aufgabe wird erfindungsgemäß durch die kennzeichnenden Merkmale des Patentanspruchs 1 und des Patentanspruchs 6 gelöst, wobei in den weiteren Patentansprüchen Merkmale aufgeführt sind, die diese Lösung in vorteilhafter Weise fortbilden.

Durch das gezielte Verändern des Schneidenöffnungswinkels der Messer wird eine genaue Anpassung des Schneidvorgangs an die Beschaffenheit des zu bearbeitenden Erntegutes erreicht.

Hierdurch erfährt das Erntegut einen genauen Schnitt, was zu einer besseren Förderwirkung des gehäckselten Ernteguts führt.
Ferner werden durch das Verstellen des Schneidenöffnungswinkels mit ein und demselben Messer schwierige Erntesituationen bewältigt. So können bei feuchten Erntebedingungen, wie beispielsweise beim Abernten von Gras, Verstopfungen durch das klebrige Erntegut, auftreten. Wird der Schneidenöffnungswinkel vergrößert, so erfährt das Erntegut neben dem Schnitt eine optimierte Förderung, was eine Verbesserung der Erntegutabgabe zur Folge hat.
Weiter verringert die Einstellung des optimalen Schneidenöffnungswinkels die benötigte Schnittenergie.

In vorteilhafter Weiterbildung der Erfindung kann die Verstellung aller Messer mittels eines Verstellmechanismus erfolgen. Dieser Verstellmechanismus steht in Wirkverbindung zu jedem einzelnen Messer. Durch die Betätigung des Mechanismus wird jedes Messer synchron und um einen kongruenten Winkel verstellt. Somit wird die erforderliche Verstellzeit wesentlich verkürzt und eine exakte Feinabstimmung des Winkelgrades der Messer zueinander und zur Zerkleinerungseinrichtung erreicht.

In einer anderen Weiterbildung erfolgt die Verstellung selbsttätig. Die Größe des Schneidenöffnungswinkels kann dabei aufgrund zuvor eingegebener Parameter festgelegt werden.
Insbesondere hat sich eine Schneidenwinkelgröße, in Abhängigkeit von dem jeweiligen Erntegut, zwischen 130° und 155 ° als besonders effizient erwiesen. Hierdurch trifft die Messerschneide optimal auf das zu häckselnde Erntegut auf. Auf diesem Weg wird die Messerschneide am wirksamsten eingesetzt und der Verschleiß und damit das Abstumpfen der Schneide niedrig gehalten.

Indem die einzelnen Messer beweglich in den Aufnahmen angeordnet sind, wird die Beschädigung bei Fremdkörperkontakt gesenkt. Zudem wird ein individuelles und gezieltes Ausweichen der Messer beim Auftreffen von harten Fremdkörpern gewährleistet. Ausgehend vom Stand der Technik können beim Aufprallen Kräfte auftreten, die dazu führen, dass das Messer so weit verschoben wird, bis seine Befestigungsschrauben abscheren oder Teile des Messers abgerissen werden. Als Folge hiervon treten, abhängig von der Größe der umherfliegenden Teilstücke, Schäden an der Zerkleinerungseinrichtung selbst und Folgeschäden innerhalb der Erntemaschine - insbesondere den nachfolgenden Baugruppen - auf, die bis zum Stillstand der Erntemaschine führen können. Der Aufwand und die Kosten zur Behebung solcher Schäden sind dabei beträchtlich.
Durch die bewegbare Anordnung der Messer in den Aufnahmen wird ein kontrolliertes Ausweichen beim Auftreffen von Fremdkörpern ermöglicht. Die Messer sind so angeordnet, dass sie im Bedarfsfall relativ zum aufprallenden Fremdkörper ausweichen, wobei die Gefahr völliger Loslösung der Klingen durch das Abscheren der Befestigungsschrauben vermieden wird. Aufgrund der beschriebenen Anordnung wird ein hoher Teil der Crashenergie vernichtet. Sollte die Crashenergie so hoch sein, dass trotzdem eine Beschädigung der Messer eintritt, so führen die umherfliegenden Teilstücke dennoch zu keinem nachhaltigen Schaden, da die Bruchstücke, aufgrund der zuvor eingetretenen Verformung der Messer in Verbindung mit dem Abbau der Crashenergie, sehr klein sind und daher ohne Schadensverursachung ungehindert die Erntemaschine durchlaufen.

Um eine gleichmäßige und genaue Verstellung der Messer zu erreichen, werden diese in hierfür vorgesehene Führungsnuten integriert. Die Führungsnuten dienen hierbei als Führung beim Verstellen.

Dadurch, dass Anschläge die Lageänderung der einzelnen Messer innerhalb der Aufnahmen begrenzen, kann es beim Rückschlagen der Messer aufgrund auftreffender Fremdkörper zu keinem Kontakt mit den Befestigungsschrauben kommen. Eine Stoßbelastung und unmittelbare Beschädigung der Befestigungsschrauben erfolgt damit nicht. Hierdurch wird ein Abscheren verhindert.

Durch die Lagerung der Messer in einer Kurvenführung kann das Erntegut konstant gehäckselt werden, ohne dass die Schnittlänge verändert wird. Zudem bleibt der Umfangsradius der Zerkleinerungseinrichtung unverändert. Durch die Kurvenführung können die Messer außerdem ohne großen Kraftaufwand in die gewünschte Stellung verbracht werden.

Eine weitere vorteilhafte Ausführungsform der Erfindung wird durch die Gestaltung der Messer erreicht. Die abgewinkelte Form der Schneidenschenkel der Messer sowie deren Krümmung in Bezug zur horizontalen Achse erfüllt den Zweck, das gehäckselte Erntegut optimal abzufördern.

Ferner können die Messer auf konstruktiv einfache Weise so beschaffen, dass sie sich bei bestimmten Belastungsstärken gezielt verformen. Dies wird erreicht, indem die Messer spezifische Schwächungen des Widerstandsmomentes aufweisen. Diese Schwächungen werden an bestimmten Stellen angesiedelt um ein Ausknicken in bestimmten Schadenssituationen herbeizuführen und so dem Ausbrechen großer Teilstücke entgegenzuwirken.
Insbesondere wird durch die zuvor beschriebenen Ausgestaltungen eine zeitaufwendige Erneuerung, die aufgrund des Ausbrechens großer Teilstücke notwendig wäre und das Aufbohren der Gewindeaufnahmen umfasst, vermieden.

Darüber hinaus wird aufgrund der zuvor beschriebenen Ausweichrichtung der Messer ein Kontakt mit dem Rücken der nachgeordneten Aufnahmen vermieden. Somit erfolgt auch in dieser Hinsicht eine Schadensprävention.

Indem die Trommelböden der Zerkleinerungseinrichtung über ringförmige Klemmelemente mit der horizontalen Achse verbunden sind, können sich die Trommelböden beim Auftreffen der Messer auf die festen Fremdkörper verdrehen. Bei großen Kollisionskräften wird die durch die Klemmelemente hergestellte Verbindung zu der Achse soweit gelöst, dass ein Verschieben der Trommelböden in Wirkrichtung der auftretenden Kraft erfolgt. Durch dieses Nachgeben wird die auftretende Crashenergie soweit reduziert, dass eine in häufigen Fällen eintretende Zerstörung der Zerkleinerungseinrichtung vorgebeugt werden kann. Schließlich wird eine Verformung der horizontalen Achse verhindert.

In vorteilhafter Weiterbildung der Erfindung richten sich die verschobenen Trommelböden selbsttätig in ihre ursprüngliche Ausgangsposition wieder aus. Auf diese Weise wird ein zeitaufwendiges manuelles justieren der einzelnen Trommelböden vermieden, wobei die ursprüngliche Anordnung der Messer zueinander erhalten bleibt.

Weitere vorteilhafte Ausgestaltungen sind Gegenstand weiterer Unteransprüche und werden nachfolgend an Hand von Zeichnungen näher erläutert.

Im folgenden wird die Erfindung anhand eines Ausführungsbeispiels dargestellt. Es zeigen:
- Figur 1: eine Häckseleinrichtung in Schnittdarstellung und Seitenansicht
- Figur 2: eine vergrößerte Schnittdarstellung einer Messerklinge im Bereich ihrer Befestigung
- Figur 3 .: eine Darstellung nach Figur 3 mit veränderter Lage der Messerklinge

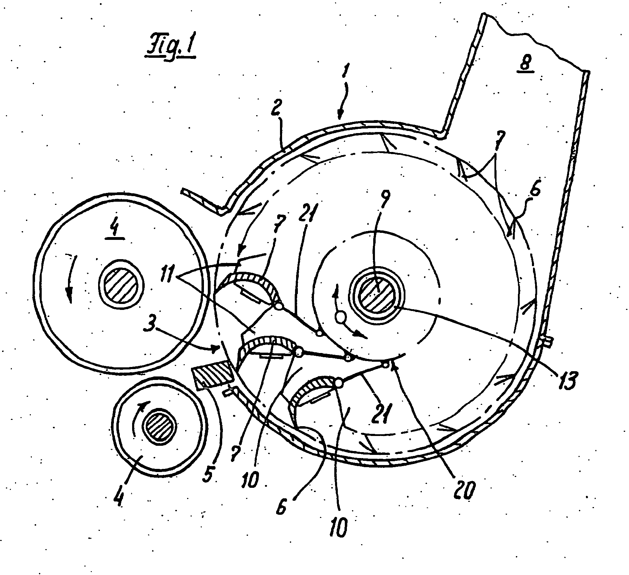

In der Figur 1 ist eine antreibare Zerkleinerungseinrichtung 1 abgebildet, die in einem Gehäuse 2 gelagert ist. Dem Gehäuseeingang 3 sind Vorpresswalzen 4 vorgeordnet, die das Erntegut verdichten und der Zerkleinerungseinrichtung 1 zuführen. Das Erntegut wird über die Gegenschneide 5 den Schneiden 6 der Messer 7 zugeführt. Dort wird das Erntegut gehäckselt und über den Auswurfkrümmer 8 abgefördert. Die Zerkleinerungseinrichtung 1 ist auf einer horizontalen Achse 9 gelagert, auf der mindestens zwei scheibenförmige Trommelböden 10 befestigt sind. An dem äußeren Umfang der Trommelböden 10 sind Aufnahmen 11 für die Messer 7 integriert. Die Auflageflächen 12 dieser Aufnahmen 11 sind der nachfolgend noch näher erläuterten schalenartigen Form der Messer 7 angepasst.
Die Trommelböden 10 sind in an sich bekannter Weise mittels Klemmelementen 13 an der horizontalen Achse 9 befestigt. Diese Verbindung ist derart ausgestaltet, dass bei starken Krafteinwirkungen aufgrund fester Fremdkörper auf die Messer 7, eine Verschiebung der Trommelböden 10 auf der horizontalen Achse 9 in Wirkrichtung der Kraft erfolgt. Eine selbsttätige Rückführung der Trommelböden 10 in ihre Ausgangsposition kann durch an sich bekannte und nicht näher dargestellte Dämpfungselemente erfolgen.

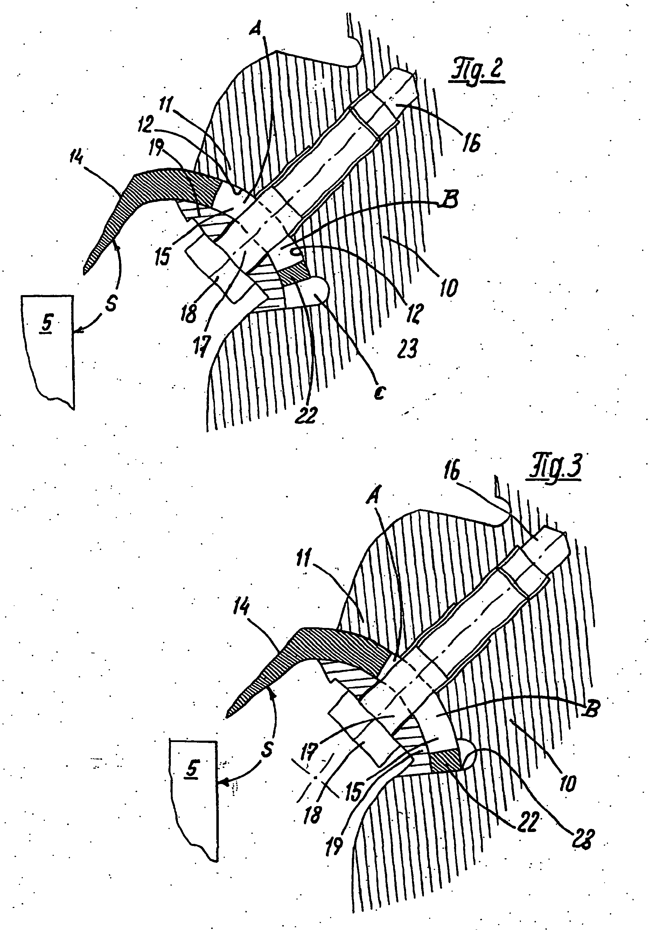

In den Figuren 2 und 3 ist die Form und die Befestigung der Messer 7, der Aufnahmen 11 und der Auflageflächen 12 dargestellt. Die Auflageflächen 12 sowie die Aufnahmen 11 sind entsprechend der Form der Messer 7 schalenartig ausgebildet. Hierdurch wird eine sichere und formschlüssige Verbindung der Messer 7 mit den Aufnahmen 11 und den Auflageflächen 12 gewährleistet. Die Schneidenschenkel 14 sind abgewinkelt und in Bezug zur horizontalen Achse 9 gekrümmt. Jedes der Messer 7 ist in dem Bereich der Aufnahme 11 mit einer Führungsnut 15 versehen. Auf gleicher Höhe der Führungsnut 15 ist in der Aufnahme 11 eine in Figur 2, 3 abgebildete Gewindebohrung 16 eingearbeitet. Auf diese Weise kann durch eine Befestigungschraube 17 eine feste Verbindung der Messer 7 mit den Aufnahmen 11 hergestellt werden. Die Festigkeit der Verbindung wird zusätzlich durch ein zwischen dem Befestigungsschraubenkopf 18 und dem Messer 7 angeordnetes Klemmelement 19 erhöht. Das Klemmelement 19 ist, wie sich aus Figur 2, 3 ergibt, messerseitig der Schalenform des Messers 7 angepasst. Hierdurch erfährt das Messer 7 eine genaue und feste Fixierung.
Die Zerkleinerungseinrichtung 1 erfährt aufgrund dieses geringen Materialaufwandes keine Erhöhung ihres Eigengewichts.

Aufgrund der Führungsnut 15 können die Messer 7 in ihrem Sitz verstellt werden. Diese Verstellung wirkt sich auf den Schneidenöffnungswinkel S aus. Der Schneidenöffnungswinkel S wird von der Messerinnenfläche X und von der vertikalen Begrenzung der Gegenschneide 5 bestimmt. Zum Verstellen des Schneidenöffnungswinkels S bedarf es lediglich des Lösens der Befestigungsschrauben 17 und des Verschiebens des Messers 7 in die gewünschte Position. Ein kompletter Austausch der Messer 7 bei Änderung der Erntegutart erübrigt sich somit. Hierdurch werden längere Stillstandszeiten und ein umfangreicher Arbeitsaufwand vermieden.
Die Veränderung des Schneidenöffnungswinkels S erfolgt in dem identischen Maß wie auch die Verstellung der Messer 7 erfolgt.
In vorteilhafter Weiterbildung der Erfindung kann die Verstellung des Schneidenöffnungswinkels S selbsttätig erfolgen. Hierbei können an sich bekannte Sensoren das Erntegut erfassen und aufgrund der ermittelten Dichte die Daten an eine nicht abgebildete Recheneinheit übermitteln die sodann eine optimale Verstellung vornimmt. Insgesamt liegt der Verstellbereich des Schneidesöffnungswinkels S zwischen 130° und 155 °, da in diesem Gradbereich der Schnitt energetisch günstig und die Erntegutförderung am wirksamsten ist.
Um eine synchrone und gleichzeitige Verstellung aller Messer 7 zu erreichen, kann ein in der Figur 1 abgebildeter scheibenförmiger Verstellmechanismus 20 an den Seiten der Trommelböden 10 eingesetzt werden. In dem Verstellmechanismus 20 ist für jedes einzelne Messer 7 mindestens ein Hebel 21 schwenkbeweglich integriert, der schwenkbeweglich mit den Messern 7 in Wirkverbindung steht. Wird der Verstellmechanismus 20 betätigt, so erfolgt eine Verstellung an jedem einzelnen Messer 7 gleichzeitig und um die identische Gradzahl. Wahlweise kann diese Verstellung aufgrund zuvor festgelegter Verstellparameter in Stufen oder stufenlos erfolgen.
Figur 2 zeigt in vergrößerter Schnittdarstellung ein bewegliches Messer 7 in unbeanspruchtem Zustand. Die Fixierung erfolgt wie in zuvor beschriebener Weise. Von entscheidender Bedeutung sind die Abschnitte A, B und C, sowie der Teilbereich 22 des Messers 7. Der Teilbereich 22 des Messers 7 kann mit dem Anschlag 23 kollidieren, sofern eines der Messer 7 mit hoher Kraft auf einen festen Fremdkörper auftrifft und das Messer 7 als Folge hieraus bis zu dem Anschlag 23 ausweicht. Der Abschnitt A verkleinert sich dabei um das Maß der Verschiebung. Der Teilbereich 22 des Messers 7 wird in demselben Maß in Richtung des Anschlages 23, von der Befestigungsschraube 17 weg, verschoben. Demgemäss vergrößert sich der Abschnitt B um den Betrag, um den sich der Abschnitt A verkleinert hat. Der Abschnitt C verkleinert sich um den identischen Betrag wie der Bereich A sich verkleinert bzw. wie der Bereich B sich vergrößert hat.
Ausschlaggebend ist hierbei die unterschiedliche Größe der Abschnitte. So muss der Abschnitt C zwingend kleiner sein als der Abschnitt A.
Der Grund hierfür ist in der Figur 3 ersichtlich. Die Figur 3 stellt die Messer 7 in beanspruchtem Zustand dar. Das Messer 7 hat in dieser Figur soviel Aufprallenergie durch einen Fremdkörper erfahren, dass es bis zum Maximum ausgewichen ist. Das heißt, dass das Messer 7 den Abschnitt A soweit ausfüllt, ohne hierbei die Befestigungsschraube 17 zu berühren. Dieser Umstand liegt darin begründet, dass durch die kleinere Ausgestaltung des Abschnitts C der Teilbereich 22 des Messers 7 gegen den Anschlag 23 stoßen muss. Dabei findet keine Berührung des Messers 7 innerhalb des Abschnitts A mit der Befestigungsschraube 17 statt. Demnach kann kein Schaden an der Befestigungsschraube 17 und dem Gewinde 16 eintreten. Zudem wird das Risiko des Abscherens der Messer 7 begrenzt.
Dieses Risiko wird durch die besondere Ausformung der Messer 7 weiter reduziert. In den Messern 7 sind nicht abgebildete Sollbruchstellen eingearbeitet. Der Grund für diese konstruktive Ausformung liegt in einer Verringerung der möglicherweise auftretenden Folgeschäden, die nach einer Kollision von festen Fremdkörpern mit den Messern 7 an den nachfolgenden Organen, aufgrund großer abgerissener Messerstücke, auftreten können. Durch die eingearbeiteten Sollbruchstellen der Messer 7 wird eine auftretende Beschädigung gezielt gelenkt und somit das Ausbrechen eines großen Teilstückes auf das Ausbrechen mehrerer kleiner Teilstücke verteilt.

Aufgrund der reduzierten Größe der Teilstücke ist der Schaden, welcher durch die Weiterförderung der losgelösten Bruchstücke an die nachgeordneten Organe verursacht werden könnte, entsprechend geringer.
Die Schadensverteilung wird auch dadurch niedrig gehalten, indem das Ausweichen der Messer 7 in Richtung der einwirkenden Kraft bis maximal kurz vor den Rücken der nachfolgenden Aufnahmen 11 erfolgen kann. Das Messer 7 kommt hierbei nicht in Kontakt mit dem Rücken der nachgeordneten Aufnahme 11, da es zu diesem Zeitpunkt bereits so weit in der dem Messer 7 zugeordneten Aufnahme 11, aufgrund des zuvor erfahrenen Aufschlages des Fremdkörpers, eingesenkt ist.

Die Erfindung ist nicht auf das beschriebene Ausführungsbeispiel beschränkt, sondern kann an beliebig ausgeführten Zerkleinerungseinrichtungen in landwirkschaftlichen Erntemaschinen eingesetzt werden, um die beschriebenen Effekte zu erzielen.

### Bezugszeichenliste

- 1: Zerkleinerungseinrichtung
- 2: Gehäuse
- 3: Gehäuseeingang
- 4: Vorpresswalzen
- 5: Gegenschneide
- 6: Schneide
- 7: Messer
- 8: Auswurfkrümmer
- 9: Horizontale Achse
- 10: Trommelboden
- 11: Aufnahme
- 12: Auflagefläche
- 13: Klemmelement
- 14: Schneidenschenkel
- 15: Führungsnut
- 16: Gewindebohrung
- 17: Befestigungsschraube
- 18: Befestigungsschraubkopf
- 19: Klemmelement
- 20: Verstellmechanismus
- 21: Hebel
- 22: Teilbereich des Messers
- 23: Anschlag

- A: Abschnitt
- B: Abschnitt
- C: Abschnitt
- S: Schneidenöffnungswinkel
- X: Messerinnenfläche

## Patentansprüche

1. Landwirtschaftliche Erntemaschine mit zumindest einer um eine horizontale Achse rotierenden Zerkleinerungseineichtung (1), deren aus Trommeiböden (10) bestehender Grundkörper an seinem äußeren Umfang mit mehreren in Umfangsrichtung zueinander beabstandet angeordneten Aufnahmen (11) besetzt ist, deren darin Integrierte Messer (7) mit der Gegenschneide (5) den Schneidenöffnungswinkel bilden,
**dadurch** gekenntzeichnet, dass
der Schneidenöffnungswinkel (S) wenigstens eines Messers (7) in der Weise veränderbar ist, dass das wenigstens eine Messer (7) In verschledenen Positionen feststellbar ist, wobei die verschiedenen Positionen von der Beschaffenheit des zu bearbeitenden Erntegutes bestimmt werden.

2. Landwirtschaftliche Emtemaschine nach Anspruch 1,
**dadurch gekennzeichnet, dass**
die Veränderung des Schneidenöffnungswinkels (8) über einen Verstellmechanismus (20) erfolgt.

3. landwirtschaftliche Erntemaschine nach einem oder mehreren der vorangegangenen Ansprüche,
**dadurch gekennzeichnet, dass**
Ober den Verstellmechanlsmus (20) die Veränderung der Schneidenöffnungswinkel (S) einer Vielzahl einstellbarer Messer (7) synchron und gleichzeitig vorgenommen werden kann.

4. Landüvirischaftliche Erntemaschine nach einem oder mehreren der vorangegangenen Ansprüche,
**dadurch gekennzeichnet, dass**
die Verstellung des Schneldeniöffnungswinkels (S) selbsttätig erfolgt.

5. Landwirtschaftliche Erntemaschine nach einem oder mehreren der vorangegangenen Ansprüche,
**dadurch gekennzeichnet, dass**
der Verstellbereich des Schneideöffnungswinkels (S) zwischen 130° und 155° liegt.

6. Landwirtschaftliche Erntemaschine nach einem der vorhergehenden Ansprüche,
**dadurch gekennzeichnet, dass**
zumindest eines der Messer (7) beweglich In den Aufnahmen (11) angeordnet ist.

7. Landwirtschaftliche Erntemaschine nach Anspruch 6,
**dadurch gekennzeichnet, dass**
in jeder Aufnahme (11) mindestens eine Führungsnut (15) eingearbeitet ist.

8. Landwirtschaftliche Erntemaschine nach den Ansprüchen 6 und 7,
**dadurch gekennzeichnet, dass**
die Verstelbarkelt der Messer (7) Innerhalb einer Führungsnut (15) erfolgt.

9. Landwirtschaftliche Erntemaschine nach Anspruch 8,
**dadurch gekennzeichnet, dass**
Anschläge (22) die Verstellbarkeit der Messer (7) begrenzen.

10. Landwirtschaftliche Erntemaschine nach Anspruch 9,
**dadurch gekennzeichnet, dass**
die Anschläge (22) In Wirkverbindung mit den Messern (7) stehen.

11. Landwirtschaftliche Erntemaschine nach den Ansprüchen 9 - 10,
**dadurch gekennzeichnet, dass**
die Anschläge (22) derart angeordnet sind, dass es beim Rückschlagen der Messer (7) zu keinem Kontakt mit angrenzenden Organen kommen kann.

12. Landwirtschaftliche Erntemaschine nach den Ansprüchen 6 - 11,
**dadurch gekennzeichnet, dass**
wenigstens eines der Messer (7) in einer Kurvenführung gelagert ist und die Krümmung der Kurvenführung das Betreiben des wenigstens einen Messers (7) In zumindest zwei Stellungen möglich macht.

13. Landwirtschaftliche Erntemaschine nach den Ansprüchen 6 - 12,
**dadurch gekennzeichnet, dass**
die Messer (7) von Schneldenschenkeln (14) gebildet werden und in abgewinkeiter Form und In Bezug zur horizontalen Achse (9) gekrümmt sind.

14. Landwirtschaftliche Erntemaschine nach den Ansprüchen 6 - 13,
**dadurch gekennzeichnet, dass**
die Messer (7) jeweils zumindest eine Sollschnittstelle aufweisen.

15. Landwirtschaftliche Erntemaschine nach den Ansprüchen 8 - 14,
**dadurch gekennzeichnet, dass**
ein Ausweichen der Messer (7) bis maximal zum Rücken der nachfolgenden Aufnahme (11) erfolgen kann.

16. Landwirtschaftliche Erntemaschine nach den Ansprüchen 6 - 15,
**dadurch gekennzeichnet, dass**
die Zerkleinerungseinrichtung (1) aus einer Vielzahl von zuelnander angeordneten Trommeiböden (10) gebildet wird und diese Trommeiböden (10) über ringförmige Klemmelemente (13) mit der horizontalen Achse (9) verbunden sind.

17. Landwirtschaftliche Erntemaschine nach den Ansprüchen 6 - 16,
**dadurch gekennzeichnet, dass**
die Trommelböden (10) Dämpfungselemente zur selbsttätigen Ausrichtung umfassen.

## Claims

1. An agricultural harvesting machine comprising at least one comminuting device (1) which rotates about a horizontal shaft and whose main body which comprises drum plates (10) is provided at its outer periphery with a plurality of receiving means (11) which are arranged in mutually spaced relationship in the peripheral direction and whose blades (7) which are integrated therein form the cutting opening angle with the counterpart cutting edge (5),
**characterised in that**
the cutting opening angle (S) of at least one blade (7) is variable in such a way that the at least one blade (7) can be fixed in different positions, wherein the different positions are determined by the nature of the crop material to be processed.

2. An agricultural harvesting machine according to claim 1 **characterised in that** the variation in the cutting opening angle (S) is effected by way of an adjustment mechanism (20).

3. An agricultural harvesting machine according to one or more of the preceding claims **characterised in that** the variation in the cutting opening angle (S) of a plurality of adjustable blades (7) can be effected synchronously and simultaneously by way of the adjustment mechanism (20).

4. An agricultural harvesting machine according to one or more of the preceding claims **characterised in that** adjustment of the cutting opening angle (S) is effected automatically.

5. An agricultural harvesting machine according to one or more of the preceding claims **characterised in that** the adjustment range of the cutting opening angle (S) is between 130° and 155°.

6. An agricultural harvesting machine according to one of the preceding claims **characterised in that** at least one of the blades (7) is arranged movably in the receiving means (11).

7. An agricultural harvesting machine according to claim 6 **characterised in that** at least one guide groove (15) is provided in each receiving means (11).

8. An agricultural harvesting machine according to claims 6 and 7 **characterised in that** adjustability of the blades (7) is effected within a guide groove (15).

9. An agricultural harvesting machine according to claim 8 **characterised in that** abutments (22) limit the adjustability of the blades (7).

10. An agricultural harvesting machine according to claim 9 **characterised in that** the abutments (22) are operatively connected to the blades (7).

11. An agricultural harvesting machine according to claims 9 and 10 **characterised in that** the abutments (22) are so arranged that when the blades (7) rebound there cannot be any contact with adjoining components.

12. An agricultural harvesting machine according to claims 6 to 11 **characterised in that** at least one of the blades (7) is mounted in a curve guide and the curvature of the curve guide enables operation of the at least one blade (7) in at least two positions.

13. An agricultural harvesting machine according to claims 6 to 12 **characterised in that** the blades (7) are formed by cutting limbs (14) and are curved in an angled shape and in relation to the horizontal shaft (9).

14. An agricultural harvesting machine according to claims 6 to 13 **characterised in that** the blades (7) each have at least one respective target cutting location.

15. An agricultural harvesting machine according to claims 6 to 14 **characterised in that** deflection of the blades (7) can be effected at a maximum to the back of the following receiving means (11).

16. An agricultural harvesting machine according to claims 6 to 15 **characterised in that** the comminuting device (1) is formed from a plurality of drum
plates (10) arranged in relation to each other and said drum plates (10) are connected to the horizontal shaft (9) by way of annular clamping elements (13).

17. An agricultural harvesting machine according to claims 6 to 16 **characterised in that** the drum plates (10) include damping elements for automatic orientation.

## Revendications

1. Récolteuse agricole, comprenant au moins un dispositif de broyage (1) qui tourne autour d'un axe horizontal et dont le corps de base, constitué de fonds de tambour (10), est muni, sur son pourtour extérieur, de plusieurs logements (11) qui sont espacés les uns des autres dans la direction périphérique et dont les couteaux (7) intégrés forment l'angle d'ouverture de coupe avec le contre-couteau (5),
**caractérisée par le fait que**
l'angle d'ouverture de coupe (S) d'au moins un couteau (7) peut être modifié de manière telle que le couteau (7), au nombre d'au moins un, puisse être fixé dans des positions différentes, lesdites positions différentes étant déterminées par la nature des produits récoltés à traiter.

2. Récolteuse agricole selon la revendication 1,
**caractérisée par le fait que**
la modification de l'angle d'ouverture de coupe (S) est effectuée par l'intermédiaire d'un mécanisme de réglage (20).

3. Récolteuse agricole selon une ou plusieurs des revendications précédentes,
**caractérisée par le fait que**
le mécanisme de réglage (20) permet d'effectuer, de façon synchrone et simultanée, la modification des angles d'ouverture de coupe (S) d'une pluralité de couteaux (7) réglables.

4. Récolteuse agricole selon une ou plusieurs des revendications précédentes,
**caractérisée par le fait que**
le réglage de l'angle d'ouverture de coupe (S) s'effectue de façon automatique.

5. Récolteuse agricole selon une ou plusieurs des revendications précédentes,
**caractérisée par le fait que**
la plage de réglage de l'angle d'ouverture de coupe (S) est comprise entre 130° et 155°.

6. Récolteuse agricole selon une des revendications précédentes,
**caractérisée par le fait qu'**
au moins un des couteaux (7) est disposé de façon mobile dans les logements (11).

7. Récolteuse agricole selon la revendication 6,
**caractérisée par le fait qu'**
au moins une rainure de guidage (15) est ménagée dans chaque logement (11).

8. Récolteuse agricole selon les revendications 6 et 7,
**caractérisée par le fait que**
le réglage des couteaux (7) peut être effectué dans une rainure de guidage (15).

9. Récolteuse agricole selon la revendication 8,
**caractérisée par le fait que**
des butées (22) limitent la possibilité de réglage des couteaux (7).

10. Récolteuse agricole selon la revendication 9,
**caractérisée par le fait que**
les butées (22) sont en liaison active avec les couteaux (7).

11. Récolteuse agricole selon les revendications 9 - 10,
**caractérisée par le fait que**
les butées (22) sont disposées de manière telle que lors du retour des couteaux (7), il ne puisse pas y avoir de contact avec des organes adjacents.

12. Récolteuse agricole selon les revendications 6 - 11,
**caractérisée par le fait qu'**
au moins un des couteaux (7) est monté dans un chemin incurvé, et la courbure du chemin incurvé permet d'utiliser le couteau (7), au nombre d'au moins un, dans au moins deux positions.

13. Récolteuse agricole selon les revendications 6 - 12,
**caractérisée par le fait que**
les couteaux (7) sont constitués de taillants (14) et sont incurvés sous une forme coudée et par rapport à l'axe horizontal (9).

14. Récolteuse agricole selon les revendications 6 - 13,
**caractérisée par le fait que**
les couteaux (7) présentent respectivement au moins un point de coupe de consigne.

15. Récolteuse agricole selon les revendications 6 - 14,
**caractérisée par le fait qu'**
un déplacement des couteaux (7) peut se produire au maximum jusqu'à la partie dorsale du logement (11) suivant.

16. Récolteuse agricole selon les revendications 6 - 15,
**caractérisée par le fait que**
le dispositif de broyage (1) est constitué d'une pluralité de fonds de tambour (10) associés les uns aux autres, et que ces fonds de tambour (10) sont reliés à l'axe horizontal (9) par des éléments de serrage (13) annulaires.

17. Récolteuse agricole selon les revendications 6 - 16,
**caractérisée par le fait que**
les fonds de tambour (10) comportent des éléments amortisseurs pour un alignement automatique.
